# EUROPÄISCHE PATENTANMELDUNG

(11) **EP 4 623 776 A1**
(43) Veröffentlichungstag der Anmeldung: **01.10.2025**
(21) Anmeldenummer: 25162904.4
(22) Anmeldetag: 11.03.2025
(51) Int. Cl.: A47K 3/40

(54) **SANITÄREINRICHTUNG UND VERFAHREN ZUR HERSTELLUNG EINER SANITÄREINRICHTUNG**

(30) Priorität: 26.03.2024 DE 102024108570; 22.08.2024 DE 102024124065
(71) Anmelder: Franz Kaldewei GmbH & Co. KG, 59229 Ahlen (DE)
(72) Erfinder:
(74) Vertreter: Andrejewski - Honke Patent- und Rechtsanwälte Partnerschaft mbB

(57) **Zusammenfassung**

Die Erfindung betrifft eine Sanitäreinrichtung umfassend einen Formkörper aus einem Volumenmaterial (7). Erfindungsgemäß ist vorgesehen. dass das Volumenmaterial aus Blähglas-Partikeln (8) und einem die Blähglas-Partikel (8) verbindenden ausgehärteten Bindemittel (9) in Form von Wasserglas gebildet ist. Gegenstand der Erfindung ist auch ein Verfahren zur Herstellung der Sanitäreinrichtung, wobei zur Bildung eines Formkörpers aus einem Volumenmaterial (7) Blähglas-Partikel (8) und Wasserglas als Bindemittel (9) bereitgestellt werden, eine Formgebung erfolgt und durch Aushärten des Bindemittels (9) das Volumenmaterial (7) gebildet wird.

## Beschreibung

Die Erfindung betrifft eine Sanitäreinrichtung umfassend einen Formkörper aus einem Volumenmaterial. Gegenstand der Erfindung ist des Weiteren auch ein Verfahren zur Herstellung einer solchen Sanitäreinrichtung.

Der Formkörper kann dabei je nach Ausgestaltung die Sanitäreinrichtung ausbilden oder ein wesentlicher Bestandteil der Sanitäreinrichtung sein. Insbesondere kann die Sanitäreinrichtung einen eine Nutzseite aufweisenden Hauptkörper aufweisen, an den der Formkörper anschließt. Beispielsweise kann der Formkörper dabei eine Füllung und/oder einen Träger darstellen und/oder an den Hauptkörper anschießende Nutzabschnitte ausbilden.

Der Hauptkörper kann beispielsweise in der Form einer Badewanne, einer Duschwanne, eines Urinals, eines Waschbeckens, eines Heizkörpers, einer Verkleidung oder dergleichen gebildet sein.

Als Nutzseite wird bei einem derartigen Hauptkörper im Rahmen der Erfindung die Seite verstanden, welche im montierten Zustand für einen Benutzer sichtbar ist. Dabei versteht sich, dass die Nutzseite in der Regel nicht eben ist, sondern eine dreidimensionale Kontur, beispielsweise eine Beckenform, aufweist.

Der Formkörper kann dann an eine Verdecktseite anschließen, welche im vollständig montierten Zustand in der Regel nicht oder nicht unmittelbar sichtbar ist. Es kann sich je nach Montage des Sanitärkörpers um eine Rückseite, eine Unterseite oder auch einen Innenraum handeln.

In vielen Anwendungsfällen kann die Nutzseite auch als Sichtseite bezeichnet werden. Wenn an der Verdecktseite eine Montage des Sanitärkörpers vorgesehen ist, so kann dies auch als Montageseite bezeichnet werden.

Die Verdecktseite ist nicht-eben. Damit ist im Rahmen der Erfindung gemeint, dass diese eine über eine Rauigkeit oder Welligkeit der entsprechenden Oberfläche hinausgehende makroskopische dreidimensionale Struktur aufweist.

Die vorliegende Erfindung umfasst unter anderem auch Sanitäreinrichtungen, bei welchen der Hauptkörper aus emailliertem Stahlblech, also aus Stahl-Emaille gebildet ist. Der Hauptkörper ist dann üblicherweise durch Blechumformung mit einer anschließenden Emaillierung gebildet, sodass die Nutzseite und die Verdecktseite üblicherweise eine zueinander komplementäre Formgebung aufweisen. Die nicht-ebene Form der Verdecktseite ist dann invers zu der Nutzseite, welche eine dreidimensionale Funktions- und/oder Dekorstruktur aufweist.

Im Rahmen des allgemeinen Erfindungsgedankens ist jedoch die Kombination des Formkörpers mit dem Hauptkörper lediglich eine mögliche und nicht zwingende Ausgestaltung. Sofern ein Hauptkörper vorgesehen ist, kommen dafür auch neben emailliertem Stahlblech auch andere Materialien wie beispielsweise Edelstahl, Kunststoff einschließlich Sanitäracryl, Keramik, Mineralguss und Glas in Betracht.

Eine gattungsgemäße Sanitäreinrichtung ist aus der DE 10 2022 128 990 B3 bekannt. Der Formkörper aus Volumenmaterial ist mit einem Hauptkörper aus emailliertem Stahlblech kombiniert. An einer Verdecktseite des Hauptkörpers ist der Formkörper aus Volumenmaterial angeordnet, wobei das Volumenmaterial eine Vielzahl von Partikeln aufweist, die durch ein Netzwerk aus Mycel-Material verbunden sind. Für die Ausbildung des Formkörpers mit einem Netzwerk Mycel-Material sind insbesondere organische Partikel aus pflanzlichem Material geeignet. Pflanzliches Material wie Hanf, Stroh, Holzspäne, Gräser und pflanzliche Abfallprodukte erlauben dann bei geeigneten Umgebungsbedingungen wie einer geeigneten Feuchte und Wärme während der Herstellung die Ausbildung des Netzwerkes aus Mycel-Material.

Dieses biobasierte Verbundmaterial weist in Kombination mit üblichen Sanitärkörpern eine hinreichende Stabilität, Festigkeit und Beständigkeit auf. Auf vorteilhafte Weise werden bei einer guten Funktionalität verbesserte ökologische Eigenschaften erreicht.

Eine weitere gattungsgemäße Sanitäreinrichtung ist aus der DE 199 61 255 C2 bekannt, wobei Polyurethanschaum als Volumenmaterial einen Wannenträger bildet. Der Wannenträger wird derart durch Aufschäumen gebildet, dass der Polyurethanschaum einen Rand der Wanne hintergreift und so eine formschlüssige Verbindung resultiert. Des Weiteren ist bekannt, dass Polyurethanschaum eine gewisse Klebrigkeit aufweist, sodass insgesamt ein integraler Verbundkörper gebildet wird. Durch das vollflächig unter dem Sanitärkörper angeordnete Volumenmaterial in Form von Polyurethanschaum wird eine gute thermische und akustische Dämmung erreicht. Die Handhabung der Sanitäreinrichtung am Ende eines Lebenszyklus ist jedoch schwierig, weil der Polyurethanschaum innig mit der Wanne aus Stahl-Emaille verbunden ist.

Der vorliegenden Erfindung liegt die Aufgabe zugrunde, eine Sanitäreinrichtung anzugeben, die kostengünstig mit guten Funktionseigenschaften gebildet werden kann und gut für einen dauerhaften Einsatz in Sanitärbereich geeignet ist.

Gegenstand der Erfindung und Lösung der Aufgabe sind eine Sanitäreinrichtung gemäß Patentanspruch 1 sowie ein Verfahren zur Herstellung einer Sanitäreinrichtung gemäß Patentanspruch 14.

Ausgehend von einer gattungsgemäßen Ausgestaltung ist demnach vorgesehen, dass das Volumenmaterial mit Blähglas-Partikeln und einem die Blähglas-Partikeln verbindenden ausgehärteten Bindemittel in Form von Wasserglas gebildet ist.

Blähglas zeichnet sich durch viele spezifische Vorteile aus. Blähglas kann insbesondere vollständig aus Altglasscherben produziert werden. Hierfür werden vorwiegend Glasfraktionen kleiner 8 mm verwendet, die für das Wiederaufschmelzen zur Produktion von Recyclingflaschen und -behältern energetisch ungünstig sein können.

Das für die Herstellung verwendete Altglas wird dann bei bekannten Verfahren zunächst in Mühlen zu Glasmehl zerkleinert, anschließend mit Binde- und Blähmittel vermengt und im weiteren Verlauf granuliert. Bei Temperaturen von beispielsweise 800 °C bis 900 °C im Drehrohrofen expandiert das Granulat und es bilden sich feine Gasporen im Korninneren. Sobald das Blähglas abgekühlt ist, kann es durch einen Siebvorgang in verschiedene Korngrößen aufgeteilt werden.

Abhängig von dem Siebprozess können dann verschiedene Korngrößen bereitgestellt werden. Entsprechende Blähglas-Partikel werden beispielsweise von der PORAVER GmbH aus 96132 Schlüsselfeld, Deutschland gefertigt. Erhältlich sind beispielsweise Korngrößenverteilungen von 0,04 bis 0,125 mm, 0,1 bis 0,3 mm, 0,25 bis 0,5 mm, 0,5 bis 1 mm, 1 bis 2 mm und 2 bis 4 mm. Die PORAVER GmbH vertreibt unter dem Markennamen PORAVER ^{®} Blähglasgranulat, welches innerhalb der einzelnen Partikel eine Vielzahl von Hohlräumen und entsprechend eine multizellulare innere Struktur aufweist. Geeignet ist des Weiteren aber auch Blähglas in Form von Hohlglaskugeln, welche keine multizellulare Struktur, sondern zumindest im Wesentlichen nur einen einzigen Hohlraum aufweisen. Entsprechende Granulate werden in unterschiedlichen Korngrößen bzw. Korngrößenverteilungen von der PORAVER GmbH unter dem Markennamen PORASPHERES ^{®} vertrieben. Bei Blähglas in Form von Hohlglaskugeln weisen die einzelnen Partikel in der Regel eine glattere, im Wesentlichen geschlossene Oberfläche auf, so dass sich eine geringere Aufnahme von Bindemittel bei der Herstellung oder auch Wasser während des Gebrauchs ergibt. Die geringere Aufnahme von Bindemittel kann dazu beitragen, die Menge an Bindemittel zu reduzieren und somit auch Kosten und Gewicht einzusparen. Die Hohlglaskugeln zeichnen sich auch durch eine sehr hohe isostatische Festigkeit aus.

Blähglas-Partikel zeichnen sich durch eine gute Wärmedämmung sowie Schall- und Schwingungsdämmung aus. Dies ist insbesondere auch auf die in den Blähglas-Partikel vorhandenen Luft- bzw. Gaseinschlüsse zurückzuführen. Des Weiteren resultiert durch die Kombination der Schall- und Schwingungsdämmung auch ein besonders hochwertiger Produkteindruck.

Erfindungsgemäß ist als anorganisches Bindemittel Wasserglas vorgesehen, welches auch als ein Geopolymer bezeichnet wird. Als Wasserglas werden aus einer Schmelze erstarrte glasartige, also amorphe, wasserlösliche Natrium-, Kalium- und Lithiumsilikate oder ihre wässrigen Lösungen bezeichnet. Je nachdem, ob überwiegend Natrium-, Kalium- oder Lithiumsilikate enthalten sind, spricht man von Natronwasserglas, Kaliwasserglas oder Lithiumwasserglas. Besonders bevorzugt ist im Rahmen der Erfindung Kaliwasserglas.

Bereits durch den Einsatz der anorganischen Blähglas-Partikel ergeben sich im Rahmen der Erfindung gute bauphysikalische Eigenschaften wie beispielsweise auch eine geringe Brandneigung. Diese Effekte werden durch Wasserglas als anorganischem Bindemittel weiter verbessert.

Das gesamte Volumenmaterial ist im Rahmen der Erfindung vollständig oder zu einem großen Teil aus anorganischem Material gebildet, was auch hinsichtlich eines Recyclings besonders vorteilhaft ist.

Im Rahmen der Erfindung kann das Volumenmaterial aus den Blähglas-Partikel und dem ausgehärteten Bindemittel in Form von Wasserglas mit einer besonders hohen Stabilität und Festigkeit gebildet werden.

Gemäß einer bevorzugten Ausgestaltung der Erfindung ist vorgesehen, dass das Volumenmaterial eine Dichte zwischen 0,15 g/cm³ (Gramm pro Kubikzentimeter) und 0,75 g/cm³ aufweist. Insbesondere kann das Volumenmaterial eine Dichte zwischen 0,20 g/cm³ und 0,65 g/cm³, beispielsweise zwischen, 0,28 g/cm³ und 0,46 g/cm³ aufweisen.

Grundsätzlich ist es möglich, dass das ausgehärtete Bindemittel die Zwischenräume zwischen den Blähglas-Partikeln vollständig oder im Wesentlichen vollständig ausfüllt. Dagegen kann es aber ausreichend sein, wenn das Bindemittel die aneinander angrenzenden Blähglas-Partikel verbindet, ohne die Zwischenräume vollständig auszufüllen. Gerade im Rahmen einer solchen Ausgestaltung ergibt sich eine besonders kosteneffiziente und vergleichsweise leichte Ausgestaltung des Volumenmaterials. In dem Volumenmaterial verbleiben dann Poren und Freiräume, wobei je nach Ausgestaltung eine offenporige Struktur, eine Struktur mit geschlossenen Poren oder Mischformen möglich sind.

Die zuvor angegebene Dichte bezieht sich dabei auf den von dem Volumenmaterial eingenommenen Raum, unabhängig, ob innerhalb des Volumenmaterials Poren verbleiben. Die Ausbildung von Poren und Zwischenräumen führt dann also in der Regel bei dem Volumenmaterial zu einer Verringerung der bestimmten Dichte.

Gemäß einer bevorzugten Ausgestaltung der Erfindung bilden die Blähglas-Partikel den Hauptbestandteil des Volumenmaterials. So ist gemäß einer bevorzugten Ausgestaltung der Erfindung vorgesehen, dass das Massenverhältnis von Blähglas-Partikeln zu ausgehärtetem Bindemitteln zwischen 95:5 und 50:50, insbesondere zwischen 90:10 und 60:40, liegt.

Die erfindungsgemäße Sanitäreinrichtung umfasst den Formkörper aus Volumenmaterial. Dabei ist es grundsätzlich auch denkbar, dass der Formkörper die gesamte Sanitäreinrichtung vollständig oder im Wesentlichen ausbildet. Dann kann es sich bei der Sanitäreinrichtung beispielsweise um einen separaten Sockel, eine Ablage, ein Wandelement oder dergleichen in einem Sanitärbereich handeln.

Die erfindungsgemäße Sanitäreinrichtung kann dann auch funktionell mit zumindest einer weiteren Sanitäreinrichtung kombiniert werden. So kann die erfindungsgemäße Sanitäreinrichtung exemplarisch eine Ablage, eine Arbeitsplatte oder dergleichen bilden, an welche dann eine separate weitere Sanitäreinrichtung, beispielsweise in Form eines Waschbeckens, angrenzt.

Gemäß einer besonders bevorzugten Ausgestaltung der Erfindung umfasst die Sanitäreinrichtung neben dem Formkörper auch einen Hauptkörper mit einer Nutzseite. Insbesondere können der Formkörper und der Hauptkörper miteinander verbunden sein, insbesondere materialschlüssig und/oder formschlüssig, und dann eine Art Verbund bilden.

Dabei ist es auch möglich, dass der Formkörper an einer insbesondere nichtebenen Verdecktseite des Hauptkörpers an diesen anschließt, wobei die Verdecktseite des Hauptkörpers und der daran anschließende Formkörper zumindest abschnittsweise eine komplementäre Topografie aufweisen.

Der Formkörper kann dann für den Hauptkörper eine Füllung, einen Träger, einen Sockel oder dergleichen bilden. Dabei kann der Formkörper sich auch aus dem Hauptkörper heraus erstrecken bzw. in einem gewissen Maße vorstehen. Im Rahmen einer solchen Ausgestaltung können dann auch in einem Einbauzustand Bereiche des Formkörpers außerhalb des Hauptkörpers für einen Benutzer freiliegen bzw. sichtbar sein. Dabei ist es dann möglich, an solchen Abschnitten eine weitere, nachfolgend noch weiter erläuterte Deckschicht vorzusehen, die insbesondere auch geschlossen ist. Je nach Art und Material der Deckschicht kann dabei auch eine gleichmäßig strukturierte oder glatte Oberfläche bereitgestellt werden.

Der Hauptkörper kann beispielsweise in der Form einer Duschfläche, einer Sanitärwanne oder eines Waschbeckens gebildet sein. Dabei sind auch Sitzwaschbecken wie Bidets umfasst, wobei der Hauptkörper auch als Pissoir, WC oder dergleichen ausgeführt sein kann.

Für den Hauptkörper kommen unterschiedlichen Materialien in Betracht. Denkbar sind beispielsweise Materialien wie beispielsweise Edelstahl, Kunststoff einschließlich Sanitäracryl, Keramik, Mineralguss und Glas. Des Weiteren kommt auch Blech in Betracht, welches auch lackiert oder pulverbeschichtet sein kann.

Gemäß einer besonders bevorzugten Weiterbildung ist der Hauptkörper aus emaillierten Stahlblech gebildet.

Je nach Art des Hauptkörpers ergeben sich in Kombination mit dem Formkörper für ein Recycling unterschiedlichen Ansätze. Wenn der Hauptkörper aus Keramik, Mineralguss oder Glas gebildet ist, kann die gesamte dann anorganische Sanitäreinrichtung nach einem Zerkleinern beispielsweise als Baumaterial genutzt werden. Bei eine Ausgestaltung des Hauptkörpers aus Glas oder gegebenenfalls auch Keramik kommt auch insgesamt ein Aufschmelzen in Betracht, um dann die gesamte Schmelze in geeigneter Weise zu neuen Produkten zu formen oder gegebenenfalls im geschlossenen Zustand in verschiedene danach nutzbare Fraktionen aufzuteilen.

Sofern der Hauptkörper Metall aufweist, ist - wie nachfolgend weiter erläutert - auch ein Aufschmelzen möglich, um dann die verschiedenen Bestandteile stofflich zu trennen. Bei einem Hauptkörper aus Metall kann der Formkörper aber auch durch mechanische Einwirkung abgetrennt, beispielsweise herausgebrochen werden.

Gemäß dem Stand der Technik nach der DE 10 2020 128 990 B3 und der DE 199 61 255 C2 wird die Stabilität der Sanitäreinrichtung im Wesentlichen von dem aus Stahl-Emaille gebildeten Hauptkörper bereitgestellt, während dann das Volumenmaterial je nach Anwendungsfall den Hauptkörper sowie gegebenenfalls auch einen darauf stehenden Benutzer tragen und abstützen soll. Gemäß dem Stand der Technik ist aber der Hauptkörper aus Stahl-Emaille dann an sich so steif und tragfähig, dass bereits in dem Hauptkörper selbst das Gewicht eines Benutzers getragen und verteilt werden kann.

Im Rahmen der Erfindung kann das Volumenmaterial aus den Blähglas-Partikeln und Wasserglas als Bindemittel dagegen eine solche Festigkeit aufweisen, dass diese die bisherigen Anforderungen an eine reine Trag- und Abstützfunktion wesentlich übersteigt. Im Rahmen der Erfindung können also der Hauptkörper und das Volumenmaterial auch auf besonders vorteilhafte Weise eine Verbundanordnung bilden, wobei dann auch wesentlich das Volumenmaterial zu der gesamten Stabilität und Tragfähigkeit beitragen kann.

Vor diesem Hintergrund kann der beispielsweise aus emailliertem Stahlblech gebildete Hauptkörper, beispielsweise in Form einer Duschfläche oder Sanitärwanne, eine übliche und aus dem Stand der Technik bekannte Struktur und Festigkeit aufweisen.

Darüber hinaus ist es jedoch im Rahmen der Erfindung auch möglich, dass der beispielsweise aus emailliertem Stahlblech gebildete Hauptkörper eine im Vergleich zum Stand der Technik geringere Festigkeit aufweist, wobei dann bei der gefertigten Sanitäreinrichtung die Gesamtstabilität auch zu einem erheblichen Anteil von dem Volumenmaterial bereitgestellt wird. Auf die in diesem Zusammenhang resultierenden Vorteile und Variationsmöglichkeiten wird nachfolgend noch im Detail eingegangen.

Wenn das Volumenmaterial zusammen mit dem Hauptkörper bereitgestellt wird, kann ein Übergang zwischen dem Volumenmaterial und dem Hauptkörper auch separat versiegelt und/oder abgedeckt werden, um an diesem Übergang einen separaten Schutz und/oder eine Abdichtung zu erreichen. Exemplarisch kann eine Abdeckung mit einem Kleb- oder Dichtstoff, einem Klebeband oder dergleichen erfolgen. Dabei ist auch zu berücksichtigen, ob der Übergang in einem montierten Zustand verdeckt oder sichtbar ist. Bei einer verdeckten Anordnung besteht keine Gefahr einer optischen Beeinträchtigung, während bei einer sichtbaren Anordnung die Versiegelung oder Abdeckung optisch angemessen gestaltet sein soll.

Die Blähglas-Partikel weisen in Kombination mit dem ausgehärteten Bindemittel in Form von Wasserglas eine langfristige Beständigkeit auf und ermöglichen eine vergleichsweise hohe Tragkraft. Des Weiteren ist zu beachten, dass die Blähglas-Partikel als Schüttgut bereitgestellt werden können, das auf unterschiedliche Weise angeordnet und geformt werden kann.

Wie auch bereits zuvor dargelegt, erlaubt der Formkörper ein besonders effizientes Recycling. So ist es beispielsweise möglich, dass das Volumenmaterial am Ende eines Lebenszyklus der Sanitäreinrichtung bei einem Recycling mechanisch von dem beispielsweise aus Stahl-Emaille gebildeten Hauptkörper getrennt wird, wobei dann der anorganische Formkörper, gegebenenfalls nach einem Zerkleinern und/oder Aufschmelzen, als Rest- bzw. Wertstoff genutzt werden kann.

Beispielsweise ist eine Nutzung im Baubereich, im Straßenbau, im Garten- und Landschaftsbau oder zu ähnlichen Einsatzzwecken möglich.

Des Weiteren ist es auch möglich, Sanitäreinrichtungen mit dem Hauptkörper aus Blech und insbesondere emailliertem Stahlblech und dem Volumenmaterial bei einem Metall-Recycling oder bei der Stahlerzeugung als Schrott beizugeben, wobei die anorganischen Blähglas-Partikel dann als Schlacke anfallen.

So ist es bekannt, dass bei der Stahlerzeugung Schlackebildner zur Prozesssteuerung besonders zweckmäßig sein können, wobei anfallende Schlacke auch als Rohstoff für den Baubereich genutzt wird. Grundsätzlich ist es je nach Recyclingprozess auch möglich, die anfallende Schlacke so aufzubereiten, dass daraus wiederum Partikel zur Bildung der erfindungsgemäßen Sanitäreinrichtung erzeugt werden können. Abgesehen von dem notwendigen Energieeinsatz kann dann auch eine Kreislaufwirtschaft der eingesetzten Rohstoffe erreicht werden.

Bei orientierenden Versuchen haben bei einem Verbund aus Formkörper und Hauptkörper Benutzer bei einem Klopfen auf den Hauptkörper einen "massiven Klang" bzw. den Eindruck eines besonders hochwertigen und massiven Produktes beschrieben. Dies gilt im besonderen Maße aber nicht nur für Hauptkörper aus emailliertem Stahlblech.

Unter Berücksichtigung der eingesetzten Materialien und der oben beschriebenen Recycling-Möglichkeiten ergibt sich für die anorganischen Blähglas-Partikel eine besonders gute Umweltverträglichkeit und Umweltbilanz, insbesondere CO₂-Bilanz.

Die Blähglas-Partikel selbst können eine unterschiedliche Form aufweisen, wobei diese auch von dem jeweils ausgewählten Material abhängt. Blähglas weist beispielsweise häufig eine abgerundete, im weitesten Sinne kugelartige Form der Partikel auf.

Unabhängig von der konkreten Form können die Blähglas-Partikel im Rahmen der Erfindung beispielsweise ein mittleres Volumen zwischen 0,0005 mm³ und 34 mm³, insbesondere zwischen 0,004 m³ und 14 mm³ aufweisen. Die Bestimmung des mittleren Volumens kann dabei durch eine arithmetische Mittelwertbildung erfolgen.

Dabei ist auch zu berücksichtigen, dass die Blähglas-Partikel in der Regel mit einer gewissen, üblichen Verteilung, beispielsweise einer Normalverteilung oder einer ähnlichen Verteilung bereitgestellt werden, wobei dann eine entsprechende Verteilungskurve um einen Maximalwert in beide Richtungen abfällt.

In diesem Zusammenhang ist es im Rahmen der Erfindung auch möglich, dass die Blähglas-Partikel bezogen auf das Volumen mit einer ersten Verteilung und einer zweiten Verteilung derart bereitgestellt werden, dass sich in einer Gesamtverteilung zumindest zwei voneinander beabstandete Maxima ergeben.

Davon ausgehend sind verschiedene Konzepte denkbar. So ist es möglich, dass die Blähglas-Partikel der ersten Verteilung und der zweiten Verteilung zumindest bereichsweise gleichmäßig gemischt sind. Dann kann beispielsweise vorgesehen sein, dass in einer statistisch gleichmäßigen Anordnung Blähglas-Partikel der ersten Verteilung und der zweiten Verteilung vorhanden sind, wobei beispielsweise kleinere Blähglas-Partikel in Zwischenräumen von großen Blähglas-Partikeln angeordnet sein können. Große Blähglas-Partikel können dann dazu vorgesehen sein, um das Volumen effizient zu füllen, wobei dann durch die dazwischen angeordneten kleineren Blähglas-Partikel zusätzliche Verbindungsstellen gebildet sein können.

Zusätzlich oder alternativ ist es jedoch auch möglich, dass die zumindest zwei Verteilungen zumindest bereichsweise nicht gleichmäßig gemischt sind. Beispielsweise ist es denkbar, Bereiche des Volumenmaterials mit der einen Verteilung und andere Bereiche mit der zweiten Verteilung zu bilden.

Wenn beispielsweise an bestimmten Stellen des Volumenmaterials besondere Belastungen erwartet werden, so kann dann gegebenenfalls auch dafür eine angepasste Verteilung bzw. Kombination von Verteilungen vorgesehen werden.

Des Weiteren ist es beispielsweise auch möglich, verschiedene Verteilungen schichtweise übereinander anzuordnen. Beispielsweise kann auch eine weiter außenliegende Schicht des Volumenmaterials mit vergleichsweise kleinen Blähglas-Partikeln gebildet werden, um eine möglichst ebene, glatte Oberfläche zu erzeugen. Grundsätzlich wird dabei auch zu erwarten sein, dass die Verteilungen an Übergängen in einem gewissen Maße miteinander vermischt sind.

Das Volumenmaterial kann einen einteiligen Formkörper bilden. Beispielsweise kann die Unterseite einer Duschwanne mit dem Volumenmaterial versehen sein.

Wenn die Duschwanne in bekannter Weise mit einer Unterkantung versehen ist, so kann dann der über die Höhe der Unterkantung gebildete Innenraum zumindest teilweise mit dem Volumenmaterial ausgefüllt sein. Dabei können Bereiche beispielsweise für die Anordnung eines Abflusses oder dergleichen ausgespart werden wozu auch auf die entsprechenden Ausführungen der DE 10 2022 128 990 B3 Bezug genommen wird. Wenn der Hauptkörper beispielsweise in Form einer Duschwanne mit einer Unterkantung versehen ist, kann das Volumenmaterial aber auch entlang der Höhe in Bezug auf den Montagezustand über die Unterkantung vorspringen oder auch gegenüber der Unterkantung zurückspringen. Entsprechende Maßnahmen sind dabei auch aus der DE 10 2022 128 990 B3 im Zusammenhang mit den Figuren 3A bis 3D erläutert, worauf ausdrücklich Bezug genommen wird.

Neben der Ausbildung eines einteiligen Formkörpers mit dem Volumenmaterial ist es grundsätzlich auch denkbar, dass das Volumenmaterial an der Verdecktseite mehrere voneinander getrennte Stützstrukturen bildet. Dabei ist jedoch zu beachten, dass dann an den Zwischenräumen die im Rahmen der Erfindung beschriebenen Eigenschaften eines vorteilhaften Verbundmaterials nicht erreicht werden. Entsprechende Ausgestaltungen sind also insbesondere dann denkbar, wenn die von dem Volumenmaterial freigelassenen Bereiche an der Verdecktseite entweder eine ausreichende Tragkraft des Hauptkörpers aufweisen oder während der Benutzung nicht übermäßig belastet sind.

Vorzugsweise ist vorgesehen, dass das Volumenmaterial stoffschlüssig und/oder formschlüssig mit dem Hauptkörper verbunden ist. In bekannter Weise kann sich eine formschlüssige Verbindung dann ergeben, wenn die Sanitäreinrichtung eine Unterkantung oder eine in sonstiger Weise gebildete Hinterschneidung aufweist, welche von dem Volumenmaterial ausgefüllt und damit hintergriffen ist. Unter einer formschlüssigen Verbindung wird dabei eine Verbindung verstanden, die nicht durch eine einfache Linearbewegung lösbar ist. Beispielsweise wird ein einfaches Aufliegen in diesem Sinne selbstverständlich nicht als Formschluss bezeichnet.

Vorzugsweise erlaubt das aushärtende Bindemittel in Form von Wasserglas zusätzlich oder alternativ einen Stoffschluss mit dem Hauptkörper aus emailliertem Stahlblech. Die Emaillierung des Stahlblechs ist dabei in der Regel an der Nutzseite und insbesondere der gesamten Nutzseite vorgesehen. Zweckmäßigerweise ist aber auch die Verdecktseite zumindest teilweise und vorzugsweise vollständig oder im Wesentlichen vollständig mit einer Emaillierung versehen.

Bei der Fertigung des Hauptkörpers kann beispielsweise vorgesehen sein, dass die gesamte Oberfläche oder nahezu die gesamte Oberfläche (beispielsweise bis auf einzelne Auflage- oder Haltepunkte) mit einer Emaillierung, beispielsweise einer Grundemaillierung, versehen ist. Je nach Ausgestaltung kann dann auch eine weitere Emaillierung, beispielsweise eine Deckemaillierung, zumindest an der Nutzseite vorgesehen werden, um eine gewünschte Oberflächenbeschaffenheit des emaillierten Stahlblechs an der Nutzseite zu erreichen. Entsprechende Maßnahmen sind dabei bei der Fertigung üblicher Sanitäreinrichtungen bekannt.

Bei der Verwendung von Wasserglas als aushärtendem Bindemittel ergibt sich der besondere Vorteil, dass Wasserglas bei dem Aushärten auch eine sehr feste Verbindung mit der anorganischen, glasartigen Emaillierung eingeht, sodass dann im besonderen Maße der bereits zuvor beschriebene Charakter eines Verbund-Materials erreicht werden kann.

Im Rahmen der Erfindung kann vorgesehen sein, dass das Volumenmaterial einen Raum mit einem Volumen zwischen 2 l und 60 l, insbesondere zwischen 5 l und 30 l einnimmt. Die Menge des Volumenmaterials hängt dabei auch von der konkreten Ausgestaltung des Hauptkörpers ab und ist nicht auf den angegebenen Bereich beschränkt.

Beispielsweise bei einem Hauptkörper in Form einer Badewanne und insbesondere einer Badewanne mit Schürze können ohne weiteres auch größere Mengen des Volumenmaterials vorgesehen sein. Der Begriff einer Badewanne mit Schürze oder eine Schürzenbadewanne bezieht sich auf Ausgestaltungen, bei denen der von einem Benutzer beim Baden belegte Innenraum von einer Innenwand gebildet ist, während eine davon separate Außenwand die sichtbare Außenseite bildet. Zwischen der Innenwand und der Außenwand verbleibt ein Abstand, wobei durch die Bereitstellung der separaten Wände auch eine unterschiedliche Formgebung möglich ist. Des Weiteren können zwischen der Innenwand und der Außenwand, die beispielsweise über einen oberen Wannenrand miteinander verbunden sind, auch Zu- und Ablaufleitungen, Armaturen oder dergleichen angeordnet sein. Der Raum zwischen Innenwand und Außenwand bildet dann im Sinne der vorliegenden Erfindung die Verdecktseite, wobei dort zumindest abschnittsweise das Volumenmaterial angeordnet sein kann.

Wie auch nachfolgend weiter erläutert, können die Blähglas-Partikel als Schüttgut bei der Herstellung sehr leicht aufgebracht und verteilt werden. So ist es beispielsweise auch möglich, dass an einer dem Hauptkörper gegenüberliegenden Seite des Volumenmaterials eine Standfläche insbesondere eine ebene Standfläche gebildet ist.

Auch wenn in vielen Anwendungsfällen eine ebene Fläche besonders zweckmäßig ist, können durch die Formbarkeit des Volumenmaterials auch andere Strukturen wie Vorsprünge, Rillen oder dergleichen erzeugt werden.

Wie bereits eingangs erläutert, kann im Rahmen der Erfindung durch das Volumenmaterial mit Blähglas-Partikeln und aushärtendem Bindemittel in Form von Wasserglas eine besonders hohe Festigkeit erreicht werden. Es ist dann beispielsweise auch möglich, im Vergleich zu bekannten Hauptkörpern aus emailliertem Stahlblech eine geringere Blechdicke vorzusehen.

Grundsätzlich ist bereits bekannt, dass unterschiedliche Hauptkörper beispielsweise in Form eines Waschbeckens oder in Form einer Duschwanne in Abhängigkeit von den jeweils zu erwartenden Belastungen mit einer unterschiedlichen Blechdicke gefertigt werden können. Im Rahmen der Erfindung wird jedoch durch die erhöhte Festigkeit des Volumenmaterials insgesamt eine Verringerung der Blechdicke für den jeweiligen Anwendungsfall möglich.

So ist gemäß einer bevorzugten Ausgestaltung der Erfindung vorgesehen, dass das Stahlblech eine Blechdicke zwischen 0,1 mm und 2,5 mm, insbesondere zwischen 0,2 mm und 1,4 mm aufweist. Beispielsweise können im Rahmen der Erfindung auch hochbelastete Hauptkörper, beispielsweise in der Form einer Duschwanne, auch mit einer Blechdicke von beispielsweise 0,2 mm bis 1,4 mm gebildet werden, wobei dann eine wesentliche Tragfunktion auch dem erfindungsgemäßen Volumenmaterial zukommt.

Wenn ausgehend von einem bekannten Hauptkörper die Blechdicke im Rahmen der Erfindung beispielsweise halbiert wird, ergibt sich auch ein entsprechend verringerter Materialbedarf für das Stahlblech, wodurch hinsichtlich der gesamten Sanitäreinrichtung geringere Kosten, ein vergleichsweise geringes Gewicht und gute ökologische Eigenschaften im Sinne einer Bilanzierung, beispielsweise einer CO₂-Bilanz, erreicht werden können.

Selbstverständlich kann das Stahlblech bei der Herstellung bei einer geringeren Blechdicke auch leichter ausgeformt werden. Es ergibt sich dann ein verringerter Fertigungsaufwand, wobei auch leichter Konturen ausgeformt werden können. Insbesondere können dann auch feinere Konturen wie beispielsweise Funktionskonturen, Ornamente, dreidimensionale Ziermuster oder dergleichen erzeugt werden.

So ist gemäß einer Variante der Erfindung vorgesehen, dass der Hauptkörper eine dekorative oder funktionelle Prägestruktur aufweist. Beispielsweise können in einer Duschwanne Rippen oder dergleichen vorgesehen sein, wobei entsprechende dekorative oder funktionelle Prägestrukturen auch bei einer aus dem Stand der Technik üblichen Blechdicke möglich sind.

Bei einer geringeren Blechdicke im Rahmen des zuvor beschriebenen Verbund-Konzeptes sind entsprechende Konturen jedoch leichter auszubilden, wobei auch schärfere Strukturen erzeugt werden können. So ist es beispielsweise auch möglich, innerhalb der Nutzfläche einer Duschwanne oder dergleichen dekorative Strukturen zu bilden, die Abwinklungen von beispielsweise mehr als 45° aufweisen.

Dabei sind im Rahmen der Erfindung mehrere Aspekte zu beachten. Einerseits kann bei einer verringerten Blechdicke eine deutlich einfachere Umformung erfolgen. Des Weiteren können dann entsprechende Stellen von dem Volumenmaterial bei Benutzung abgestützt sein, sodass auch bei einer vergleichsweise scharfen Umformung keine Schwachstellen der gesamten Sanitäreinrichtung resultieren. Darüber hinaus ergibt sich auch der Vorteil, dass die Blähglas-Partikel als Schüttgut bereitgestellt werden, wobei dann bei der Herstellung das Schüttgut sich auch an komplexe Formen unmittelbar anpassen kann, bevor dann das Bindemittel auswertet.

Die Erzeugung von Strukturen kann beispielsweise gemäß der DE 10 2022 114 727 A1 erfolgen, wobei auch gerade dann die Ausformung bei einer verringerten Blechdicke noch einfacher und noch flexibler möglich ist.

Die zuvor im Zusammenhang mit emaillierten Stahlblech als Material für den Hauptkörper dargestellten Überlegungen gelten in gleicher oder ähnlicher Weise auch für Hauptkörper aus anderen Materialien, beispielsweise auch Edelstahl, Kunststoff einschließlich Sanitäracryl, Keramik, Mineralguss und Glas. Auch dann kann wegen der besonderen Verbundeigenschaften eine geringere Festigkeit und/oder Materialstärke des Hauptkörpers vorgesehen sein.

Wie auch bereits zuvor dargelegt, kann der Hauptkörper eine Duschfläche oder eine Sanitärwanne bilden. Die Sanitärwanne kann beispielsweise als Waschbecken, Badewanne oder Duschwanne ausgeführt sein. Darüber hinaus können aber auch andere Sanitäreinrichtungen wie beispielsweise eine Heizung für den Sanitärbereich, eine Trennwand, Wandelemente, Verkleidungen wie Schürzen oder dergleichen gebildet werden.

Bei einer Vielzahl von Anwendungen ist ein einteiliger Hauptkörper vorgesehen, wobei aber auch eine mehrteilige Ausgestaltung nicht ausgeschlossen ist. Der Hauptkörper kann beispielsweise mehrteilig als Badewanne mit Schürze ausgeführt sein, wobei dann der Hauptkörper von einem Wannenteil und einem Schürzenteil gebildet ist. Entsprechende Teile können dann gegebenenfalls auch direkt über das Volumenmaterial verbunden sein. Ähnliche Überlegungen gelten beispielsweise auch bei einer aus mit Halbteilen gebildeten Trennwand oder einem mit zumindest zwei Teilen gebildeten Heizkörper.

Selbstverständlich können Badewanne oder Waschbecken mit Schürze aber auch mit einem zusammenhängenden Hauptkörper bereitgestellt werden, wobei entsprechende Wandabschnitte beispielsweise miteinander verschweißt oder gegebenenfalls auch aus einem Blechabschnitt gebildet sein können.

Insbesondere bei mehreren Teilen oder miteinander verschweißten Abschnitten können im Rahmen der Erfindung auch unterschiedliche Blechdicken vorgesehen sein. Wenn beispielsweise eine Schürze einer Badewanne nicht tragend ist, so kann dafür gegebenenfalls auch eine geringere Blechdicke vorgesehen sein.

Erfindungsgemäß ist das Volumenmaterial aus den Blähglas-Partikeln und dem die Blähglas-Partikel verbindenden ausgehärteten Bindemittel in Form von Wasserglas gebildet. Dabei ist im Rahmen der Erfindung insbesondere vorgesehen, dass das Volumenmaterial im Wesentlichen aus den Blähglas-Partikeln und dem Bindemittel gebildet ist, wobei aber grundsätzlich in einem vergleichsweise geringen Anteil auch noch weitere Bestandteile vorgesehen sein können.

Das Volumenmaterial besteht vorzugsweise zu zumindest 80 Gew.-%, besonders bevorzugt zumindest 90 Gew.-%, beispielsweise zumindest 95 Gew.-% aus den Blähglas-Partikeln und dem Bindemittel. Schließlich kann das Volumenmaterial auch vollständig nur aus den Blähglas-Partikeln und dem Bindemittel gebildet sein.

Denkbar sind beispielsweise Farbstoffe, Farbpigmente, Verstärkungsfasern oder dergleichen, welche zumindest abschnittsweise gleichmäßig in dem Volumenmaterial angeordnet sein können. Grundsätzlich kommen dabei verschiedene anorganische sowie organische Verstärkungsfasern in Betracht, wobei organische Verstärkungsfasern sowohl synthetisch, beispielsweise als Kohle- oder Polymerfasern, oder auf pflanzlicher Basis gebildet werden können.

Besonders bevorzugt sind Glasfasern, weil diese eine gute Anbindung an Wasserglas als Bindemittel sowie die Blähglas-Partikel aufweisen.

Es ist dabei denkbar, dass bereichsweise die Art und/oder Menge und/oder Anordnung von den beschriebenen Zusatzstoffen unterschiedlich ist. Beispielsweise können besonders belastete Bereiche gezielt verstärkt werden oder auch durch unterschiedliche Farbstoffe Farbwechsel erzeugt werden.

Bei zumindest abschnittsweise vorgesehenen Verstärkungsfasern ist es möglich, diese ohne eine spezielle Ausrichtung vorzusehen, um das Volumenmaterial im Wesentlichen isotrop auszubilden. Denkbar ist jedoch auch eine gewisse Ausrichtung von Verstärkungsfasern, um gezielt anisotrope Eigenschaften zu erzeugen.

Hinsichtlich der Herstellung des Volumenmaterials sind auch Zusätze denkbar, welche sich zumindest teilweise auch verflüchtigen können. In Betracht kommen beispielsweise Zusätze, welche das Bindemittel vor dem Aushärteprozess stabilisieren und/oder den Aushärteprozess in einer gewünschten Weise beeinflussen und/oder die Eigenschaften des Formkörpers modifizieren können. Beispielweise kann eine Modifikation der mechanischen Eingeschalten wie Festigkeit und Elastizität vorgesehen sein.

Entsprechende Zusätze für das Bindemittel können sowohl als lösliche oder unlösliche Stoffe zugegeben. Bei löslichen Bestandteilen ergibt sich dann das Bindemittel mit den darin gelösten zusätzlichen Bestandteilen, welche sich bei dem Aushärten verflüchtigen können oder als Materialkomponente in dem Formkörper verbleiben. Bei unlöslichen Bestandteilen kann insbesondere eine Dispersion gebildet werden.

Die Erläuterungen zu den möglichen Zusatzstoffen beziehen sich im Rahmen der Erfindung auf Partikel und Fasern, welche einen Durchmesser von weniger als 1 mm aufweisen. In diesem Sinne handelt es sich um mikroskopische Zusatzstoffe, welche dann als Teil des im Wesentlichen aus den Blähglas-Partikeln und dem Bindemittel gebildeten Volumenmaterials betrachtet werden. Größere Strukturen werden dagegen als von dem Volumenmaterial verschiedene Funktionselemente betrachtet.

Entsprechende Zusatzstoffe können beispielsweise als Pulver zugegeben werden. Wenn ein Pulver oder ein anderer Stoff, insbesondere Feststoff, vorgesehen ist, kann dieser sowohl dem Bindemittel als auch der Schütte aus Blähglas-Partikeln zugegeben werden.

So ist gemäß einer weiteren Ausgestaltung der Erfindung vorgesehen, dass zumindest ein Funktionselement in das Volumenmaterial eingebettet ist. Das Funktionselement kann dabei entweder vollständig in dem Volumenmaterial angeordnet sein oder sich aus dem Volumenmaterial heraus erstrecken.

Als eingebettete Funktionselemente kommen beispielsweise Sensoren, Heizungs- und/oder Wärmetauscherrohre, elektrische Heizeinlagen oder dergleichen in Betracht.

Als Funktionselemente können im Rahmen der Erfindung auch Verstärkungseinlagen vorgesehen sein. Denkbar sind beispielsweise Verstärkungsmatten oder Verstärkungsstränge. Im Rahmen der Erfindung ist eine solche Weiterbildung grundsätzlich möglich, aber aufgrund der alleine durch geeignete Blähglas-Partikel und das ausgehärtete Bindemittel zu erreichenden Festigkeit bei vielen Ausgestaltungen nicht bevorzugt. Grundsätzlich geeignet sind beispielsweise Matten und Stränge aus Glasfaser, welche gerade mit Wasserglas als Bindemittel eine sehr feste und dauerhafte Verbindung eingehen können.

Funktionselemente, die sich aus dem Volumenmaterial heraus erstrecken oder zumindest an dem Volumenmaterial zugänglich sind, können beispielsweise Wannenanker, Füße, Schraubhülsen, Erdungslaschen, Befestigungsschienen, Installationsprofile oder dergleichen sein.

Bei einem geeigneten Material ist es auch möglich, dass Funktionselemente nicht in das Volumenmaterial eingebettet sind, sondern lediglich daran anschließen. Beispielsweise kann ein Wannenanker aus Stahl-Emaille oder auch ein anderer Gegenstand bei der Herstellung vor dem Aushärten des Bindemittels aufgelegt werden und wird dann auch durch das Aushärten des Bindemittels stoffschlüssig verbunden.

Funktionselemente in Form von Sensoren oder anderen elektronischen Bauteilen können für verschiedene Zwecke vorgesehen sein. Sensoren können beispielsweise zur Ermittlung von Feuchtigkeit, Erschütterungen sowie der Temperatur vorgesehen sein. Damit können sowohl Komfortfunktionen als auch Sicherheitsfunktionen verknüpft sein, wobei auch die Verarbeitung einer Vielzahl von Informationen mit einer Steuereinrichtung eine Datenübertragung und - speicherung sowie weiteres mehr möglich ist.

Die Ermittlung der Feuchtigkeit kann beispielsweise erfolgen, um bei möglichen Wasserschäden einen Alarm auszulösen. Die Ermittlung von Erschütterungen kann beispielsweise für eine Sturzerkennung genutzt werden, wobei dann gegebenenfalls auch eine Alarmierung von Hilfe und/oder eine Verknüpfung mit weiteren Nutzungsdaten möglich ist. Akustische Empfänger, beispielsweise in Form eines Mikrofons, ermöglichen eine Überwachung der Nutzung, der Geräuschentwicklung oder gegebenenfalls auch eine Fehleranalyse. Lautsprecher können dagegen für die Ausgabe von Warnmeldungen, Musik, Sprachanweisungen oder dergleichen genutzt werden, wobei gegebenenfalls auch eine an den Lautsprecher angrenzende Schicht nach dem Prinzip eines Körperschallwandlers als Membran bzw. Resonanz- oder Schwingungskörper genutzt werden kann. Gerade bei niedrigen Frequenzen und damit entsprechend langwelligen Schwingungen ist durch die Kombination einer Schallerfassung und -aussendung auch in einem gewissen Maße eine aktive Geräuschverringerung denkbar.

Bei einem optional vorgesehenen Hauptkörper aus Stahl-Emaille kann zumindest einer der beschriebenen rückseitig direkt an den Hauptkörper anschließen, sodass dann eine direkte Übertragung von Schwingungen, Erschütterungen oder der Temperatur möglich ist.

Wie auch nachfolgend weiter erläutert, können an dem Formkörper auch Freiräume erzeugt werden. Grundsätzlich kann ein solcher Freiraum auch dazu genutzt werden, nachträglich einen Sensor oder dergleichen vorzusehen, wobei diese dann auch bedarfsweise als optionales Zubehör ergänzt werden können und gegebenenfalls auch eine Wartung oder ein Austausch möglich ist.

Als Funktionselemente kommen auch Dichtmaterialien in Betracht, welche als Bahnen, Bänder, Dichtecken oder dergleichen in den die Sanitäreinrichtung integriert sind. Solche Dichtmaterialien können sich beispielsweise teilweise in den Formkörper eingebettet sein und sich dann, insbesondere an eine Seite, davon weg erstrecken, um beispielsweise den dichtenden Anschluss an eine angrenzende Boden- oder Wandfläche zu ermöglichen. Bei den typischerweise aus folienartigen und/oder textilartigen Materialien gebildeten Dichtelementen ist dann gegebenenfalls mit einer verminderten Haftung gegenüber dem Volumenmaterial zu rechnen. Es kann aber ausreichend sein, wenn das Dichtmaterial zumindest in einem gewissen Maße an oder in dem Volumenmaterial haftet.

Bei der Kombination des Formkörpers aus Volumenmaterial mit dem optionalen Hauptkörper kann ein Dichtmaterial auch bei der Herstellung der Sanitäreinrichtung zwischen den Blähglaspartikeln mit dem Binder und dem Hauptkörper eingelegt und dann durch das Aushärten zu dem Volumenmaterial zumindest in einem gewissen Maße fixiert werden.

Dichtbahnen oder Dichtbänder können beispielsweise an einem Rand des Hauptkörpers vorgesehen sein, wenn dieser beispielsweise ein Waschbecken, eine Duschfläche, eine Duschwanne oder eine Badewanne bildet. Entsprechende Einrichtungen können dann besonders leicht wasserdicht an Boden- und Wandflächen oder anderen angrenzenden Flächen installiert werden. Dabei ist es auch möglich, entsprechende Dichtmaterialien bei der Herstellung zunächst wasserdicht mit dem Hauptkörper zu verkleben. Im Rahmen einer solchen Variante kann zu berücksichtigen sein, dass durch das zwischengelagerte Dichtmaterial dort lokal keine direkte und insbesondere keine direkte stoffschlüssige Verbindung zwischen dem Volumenmaterial und dem Hauptkörper vorliegt. Sofern aber in andern Bereichen eine solche Verbindung sichergestellt ist, kann dies hingenommen werden.

Ein Dichtmaterial, eine Dichtanstrich oder dergleichen kann auch an einer Außenseite des Formkörpers vorgesehen sein, welche beispielsweise in montierten Zustand eine Unterseite bildet. Wenn beispielsweise der Formkörper eine mit einer Unterkantung versehene Duschwanne als Hauptkörper unterseitig ausfüllt, kann das Dichtmaterial bzw. der Dichtanstrich einen unterseitigen, wasserdichten Abschluss bilden, der vorzugsweise auch an den Hauptkörper selbst im Bereich der Unterkantung angeschlossen ist. Entsprechende Anordnungen sind aber auch bei anderen Hauptkörpern möglich, insbesondere wenn diese keine Unterkantung aufweisen.

Sowohl ein Dichtanstrich als auch Dichtmaterial in Form von Bahnen oder Bändern können auch nachträglich aufgebracht, beispielsweise aufgestrichen oder aufgeklebt werden. Zur Ausbildung einer unterseitigen Dichtebene durch Dichtmaterial wird in diesem Zusammenhang auch auf die DE 10 2023 106 148 A1, die DE 10 2022 108 166 A1 und EP 3 851 598 A2 verwiesen, wobei die dort beschriebenen Maßnahmen zur Abdichtung und auch zum Anschluss eines Wasserablaufs im Rahmen der vorliegenden Erfindung besonders zweckmäßig sein können.

Wenn der Formkörper gemäß einer Variante der Erfindung mit dem Hauptkörper kombiniert ist, kann sich der Formkörper auch zumindest abschnittsweise aus dem Hauptkörper heraus erstrecken bzw. gegenüber dem Hauptkörper im montierten Zustand freiliegende Abschnitte aufweisen. Des Weiteren umfasst die Erfindung auch Ausgestaltungen, bei welchen der Formkörper die Sanitäreinrichtung teilweise oder vollständig ausbildet, wobei dann insbesondere kein Hauptkörper vorhanden ist. Wie bereits zuvor erläutert, kann dann die im Wesentlichen nur von dem Formkörper gebildete Sanitäreinrichtung beispielsweise in einem Sanitärbereich einen separaten Sockel, eine Ablage, ein Wandelement bilden, wobei auch dann Abschnitte des Formkörpers freiliegen.

Insbesondere in einem solchen Zusammenhang ist es zweckmäßig, wenn das Volumenmaterial zumindest abschnittsweise mit einer vorzugsweise geschlossenen Deckschicht oder einer separat aufgebrachten Verkleidung versehen ist.

Gemäß einer bevorzugten Ausgestaltung der Erfindung ist vorgesehen, dass die Deckschicht ein Material ausgewählt aus der Gruppe Lack, Kunststoff-Harz, Folie, Pulverbeschichtung aufweist oder aus einer verschmolzenen Schicht der Blähglas-Partikel gebildet ist. Je nach Material kann die Deckschicht auch Unebenheiten ausgleichen, um dann eine glatte oder zunächst gleichmäßig strukturierte Oberfläche zu bilden. Grundsätzlich ist für eine Nivellierung aber auch eine Ausgleichsschicht aus einem weiteren Material möglich. Wenn der Formkörper mit dem optionalen Hauptkörper kombiniert ist, kann auch hinsichtlich der Materialien und/oder der Farbe und/oder der Oberflächenbeschaffenheit eine gewissen Anpassung oder auch bewusste Abgrenzung erfolgen.

Dabei ist zu beachten, dass durch die Kombination von Blähglas-Partikeln und Wasserglas als Bindemittel in der Regel zunächst entsprechend der Partikelstruktur ungleichmäßige Oberflächen gebildet werden. Durch die zuvor genannte Deckschicht kann dann davon ausgehend eine besonders glatte, hochwertige Oberfläche erzeugt werden. Je nach Design-Vorgaben kann aber auch die unmittelbar von den Blähglas-Partikeln gebildete Oberfläche für einen rauen Look genutzt werden, welcher dann eine Struktur von feinem Kies oder groben Sand erinnern kann.

Lacke und Kunststoff-Harze können flüssig aufgebracht und nachfolgend ausgehärtet werden. Sowohl für Lacke als auch Kunststoff-Harze sind verschiedene physikalische und/oder chemische Aushärteprozesse bekannt. Das Aushärten kann beispielsweise durch ein Trocknen, eine UV-Aktivierung, eine thermische Aktivierung, die Mischung zweier reaktiver Komponenten oder dergleichen erfolgen.

Eine Folie als Deckschicht kann beispielsweise verklebt werden, wobei Klebstoff dann separat aufgetragen werden kann oder bereits als Klebeschicht auf einer selbstklebenden Folie bereitgestellt wird. Hochwertige, widerstandsfähige und gut zu verarbeitende Folien sind beispielsweise aus den Automobil- und Möbelbereich bekannt.

Um eine verschmolzene Schicht der Blähglas-Partikel gebildet kann eine oberflächliche Wärmezufuhr vorgesehen sein, welche die Blähglas-Partikel an der Oberfläche aufschmilzt, wobei sich dadurch zunächst eine schmelzflüssige Schicht und nachfolgend durch Erstarren die Deckschicht ergeben kann. Im schmelzflüssigen oder zumindest weichen Zustand sind dann gegebenenfalls auch Glätten oder auch eine Strukturierung, beispielsweise mit einer Art Stempel, möglich. Eine solche Modifikation der Oberfläche kann grundsätzlich großflächig oder auch nur bereichsweise erfolgen.

Gegenstand der Erfindung ist auch ein Verfahren zur Herstellung der zuvor beschriebenen Sanitäreinrichtung.

Zur Bildung eines Formkörpers aus einem Volumenmaterial werden Blähglas-Partikeln und Wasserglas als Bindemittel bereitgestellt Es erfolgt eine Formgebung und durch Aushärten des Bindemittels wird das Volumenmaterial gebildet.

Hinsichtlich der Herstellung ergeben sich verschiedene Handlungsoptionen, die teilweise auch miteinander kombiniert werden können.

Wenn die Sanitäreinrichtung neben dem Formkörper den zuvor beschriebenen Hauptkörper umfasst, kann der Hauptkörper auch als Form für die Herstellung des Formkörpers genutzt werden. Beispielsweise können Frei- und Hohlräume an einer Rückseite oder Verdecktseite des Hauptkörpers bei der Herstellung mit den Blähglas-Partikeln und dem noch nicht ausgehärteten Bindemittel in Form von Wasserglas ausgefüllt werden, so dass sich dann direkt durch den Herstellungsprozess eine komplementäre Form ergibt.

Zusätzlich oder alternativ kann der Formkörper oder zumindest ein Teil des Formkörpers bei der Herstellung auch durch eine separate Form begrenzt sein, wobei diese Form dann nach dem Aushärten des Bindemittels wieder entfernt wird. Damit sich beispielsweise der Formkörper aus einen Frei- oder Hohlraum des Hauptkörpers heraus erstrecken kann, können beispielsweise ein an den Hauptkörper anschließender Rahmen, Schalbretter oder dergleichen vorgesehen sein.

Bei der Erzeugung des Formkörpers in einer Form kann bei dem Herstellungsprozess ein Schüttmaterial eingesetzt werden, bei dem die Blähglas-Partikel bereits mit dem noch nicht ausgehärteten Bindemittel benetzt sind. Denkbar ist es des Weiteren aber auch, die Blähglas-Partikel zunächst trocken einzubringen und dann das Bindemittel hinzuzufügen, beispielsweise durch ein Aufsprühen.

Für das Aushärten des Bindemittels in Form von Wasserglas kann auch eine gezielte Einstellung der Umgebungstemperatur erfolgen, um den Aushärteprozess zu beeinflussen und beispielsweise durch eine Temperaturerhöhung zu beschleunigen oder je nach Materialzusammensetzung zu aktivieren.

Gemäß einer möglichen Ausgestaltung ist vorgesehen, dass ein beispielsweise aus emailliertem Stahlblech gebildeter Hauptkörper bereitgestellt wird, der eine Nutzseite und eine vorzugsweise nicht-ebene Verdecktseite aufweist, wobei Blähglas-Partikel als Schüttgut und ein unausgehärtetes Bindemittel aufgebracht werden und wobei nachfolgend durch das Aushärten des Bindemittels ein Volumenmaterial gebildet wird, welches zumindest abschnittsweise eine zu der Verdecktseite komplementäre Topographie aufweist.

Zusätzlich oder alternativ zu der Nutzung einer Form kann das Volumenmaterial zumindest teilweise durch ein additives Fertigungsverfahren aus den Blähglas-Partikeln und Wasserglas als Bindemittel gebildet werden.

So ist es möglich, dass durch eine Art 3D-Druckverfahren mit Bindemittel versetzte Blähglas-Partikel sukzessive aufgetragen werden, um eine gewünschte dreidimensionale Kontur auszubilden.

Unabhängig von den zuvor beschriebenen Fertigungsvarianten kann der Formkörper auch nach dem Aushärten des Bindemittels durch Schneiden und/oder Sägen und/oder Fräsen und/oder Schleifen weiter geformt werden.

Das Volumenmaterial selbst kann leicht auf verschiedene Art und Weise durchtrennt werden, wobei auch ein herkömmliches Sägen in Betracht kommt. Wenn der Formkörper mit dem optionalen Hauptkörper kombiniert ist, können der Formkörper und der Hauptkörper auch gemeinsam geschnitten werden. Bei vielen Materialen für den Hauptkörper, einschließlich Stahl-Emaille, kommt beispielsweise ein Wasserstrahlschneiden in Betracht. Unabhängig von der genauen Verfahrensweise kann es bei Stahl-Emaille zweckmäßig sein, die beschnittene Kante durch eine Abdeckung, eine Beschichtung und/oder eine erneute Emaillierung insbesondere gegen Korrosion zu schützen.

Falls der Formkörper zunächst unabhängig von dem Hauptkörper gefertigt wird, ist es auch grundsätzlich denkbar, den Formkörper dann für die Ausformung des Hauptkörpers zu nutzen. So ist aus der DE 10 2022 114 727 A1 ein Verfahren bekannt, bei welchem eine Sanitärkomponente zwischen einem Formwerkzeug und einer flexiblen Membran ausgeformt wird. Der zuvor beschriebene Formkörper kann dann als Formwerkzeug genutzt werden und an dem so ausgeformten Hauptkörper verbleiben. Gewissermaßen wird dann der Hauptkörper auf den Formkörper aufgebracht bzw. aufgezogen. Auch durch eine solche Fertigung kann ein besonders stabiler Verbund erzeugt werden. Wenn der Hauptkörper beispielsweise aus einem Edelstahlblech gebildet ist, ist die gesamte Sanitärkomponente dann nach der Umformung fertiggestellt bzw. im Wesentlichen fertiggestellt. An einem anderen Metallblech kann nachfolgend auch noch eine Beschichtung, beispielsweise eine Emaillierung oder Lackierung aufgebracht werden.

Sofern die Sanitäreinrichtung den zuvor beschriebenen Hauptkörper umfasst, ist bevorzugt vorgesehen, dass sich das Volumenmaterial durch das Aushärten des Bindemittels stoffschlüssig mit dem Hauptkörper, insbesondere der Verdecktseite des Hauptkörpers verbindet. Es entsteht dann unmittelbar ein besonders fester Verbund alleine durch das Aushärten des Bindemittels.

Dabei kann insbesondere vorgesehen sein, dass das aufgebrachte Schüttgut vor dem Aushärten des Bindemittels insbesondere mit den zuvor beschriebenen Verfahren geformt wird. Das Ausformen kann beispielsweise auch durch ein Glattziehen oder eine Art Modellieren erfolgen. Es können auch Leisten, Füllstücke oder andere Elemente eingesetzt werden, um das Volumenmaterial in einer gewünschten Weise ausformen zu können.

Beispielsweise ist es auch möglich, dass vor dem Aushärten des Bindemittels und vorzugsweise auch vor dem Aufbringen der Blähglas-Partikel als Schüttgut ein Füllkörper an der Sanitärrichtung angeordnet wird, wobei der Füllkörper unter Ausbildung eines Freiraums in dem Volumenmaterial wieder entfernt wird. Der Füllkörper wird zweckmäßigerweise dann entnommen, wenn das Bindemittel zumindest teilweise ausgehärtet ist.

Zusätzlich oder alternativ zu Füllkörpern können auch eine randseitige Begrenzung, Leisten, ein Rahmen, einer Art Verschalung oder dergleichen vorgesehen sein, welche beispielsweise an den optional vorgesehenen Hauptkörper anschließen können.

Zumindest ein Freiraum kann - wie zuvor dargelegt - für die Anordnung eines Sensors, eines Lautsprechers, einer Steuerung, einer Armatur, eines Ab- oder Überlaufs, einer Zu- oder Ableitung oder dergleichen vorgesehen sein, wobei dann der Freiraum den entsprechenden Platz für die Montage bereitstellt.

Denkbar ist dabei auch, dass der Freiraum selbst unmittelbar mit einer bestimmten Funktion versehen ist, beispielsweise als Fluidkanal oder dergleichen. Luftkanäle können beispielsweise für eine Temperierung, also eine Heizung und/oder Kühlung, eine Trocknung oder dergleichen vorgesehen sein. Auch die Zufuhr von Luft bei einem Whirlpool-System ist nicht nur durch separate Leitungen, sondern gegebenenfalls auch direkt durch geeignete Freiräume möglich. Sofern der zumindest eine Freiraum eine wasserdichte Oberfläche aufweist, kommt beispielsweise auch eine Zu- und/oder Ableitung von Wasser in Betracht. Dann können beispielsweise auch Überläufe direkt von dem Volumenmaterial gebildet sein.

Wie bereits eingangs erläutert, kann das Volumenmaterial im Rahmen der Erfindung wesentlich der Stabilität der gesamten Sanitäreinrichtung beitragen. Dabei ist es bekannt, dass beispielsweise durch ein Tiefziehen umgeformtes Blech auch gewisse Verzüge haben kann, die teilweise nicht im Einzelnen vorausgesagt werden können. Dies gilt insbesondere, wenn ausgehend von bekannten Hauptkörpern die Blechdicke verringert wird. Es ist dann auch möglich, dass der Hauptkörper für sich alleine betrachtet nur eine geringe Eigenstabilität aufweist.

Vor diesem Hintergrund ist gemäß einer bevorzugten Ausgestaltung der Erfindung vorgesehen, dass der Hauptkörper während des zumindest teilweisen Aushärtens des Bindemittels durch aktive Krafteinwirkung gehalten bzw. fixiert wird. Entsprechend liegt dann der Hauptkörper bei dem Aushärten nicht nur auf einem Untergrund auf. Vielmehr sind dann darüber hinausgehende oder alternative Maßnahmen zur Fixierung vorgesehen. Beispielsweise kann der Hauptkörper magnetisch oder in anderer Weise, beispielsweise durch Unterdruck, in einer vorgegebenen Form gehalten werden, sodass dann etwaige Verzüge ausgeglichen sind.

Möglich ist es auch, den Hauptkörper durch randseitige Leisten oder andere Elemente auf eine Unterlage zu drücken und somit zu fixieren. Auch dann können etwaige Verzüge ausgeglichen werden, bis das Bindemittel zumindest teilweise ausgehärtet ist. Der Hauptkörper wird dann so lange in einer gewünschten Form gehalten, bis die Sanitäreinrichtung im Sinne eines Verbundmaterials die gewünschte Festigkeit zumindest zu einem Teil bereits aufweist.

Es versteht sich, dass die Blähglas-Partikel bei der Herstellung durch ein Rütteln und/oder ein Komprimieren in einem gewissen Maße verteilt und/oder verfestigt werden kann, wobei aber eine Zerstörung der Blähglas-Partikel durch eine zu starke Krafteinwirkung in der Regel vermieden werden soll.

Die Erfindung wird nachfolgend anhand von Figuren erläutert. Es zeigen:
- Fig. 1: einen Hauptkörper zur Bildung einer Sanitäreinrichtung,
- Fig. 2: die Sanitäreinrichtung mit dem Hauptkörper und einem daran angeordneten Volumenmaterial,
- Fig. 3: eine Detailansicht der Sanitäreinrichtung in einer Schnittdarstellung,
- Fig. 4: eine vergrößerte Ansicht des Volumenmaterials,
- Fig. 5: eine exemplarische Darstellung der Sanitäreinrichtung bei einer Montage,
- Fig. 6: eine Variante der Sanitäreinrichtung in einer Ansicht entsprechend der Fig. 2,
- Fig. 7: einen Sanitärbereich mit mehreren erfindungsgemäßen Sanitäreinrichtungen.

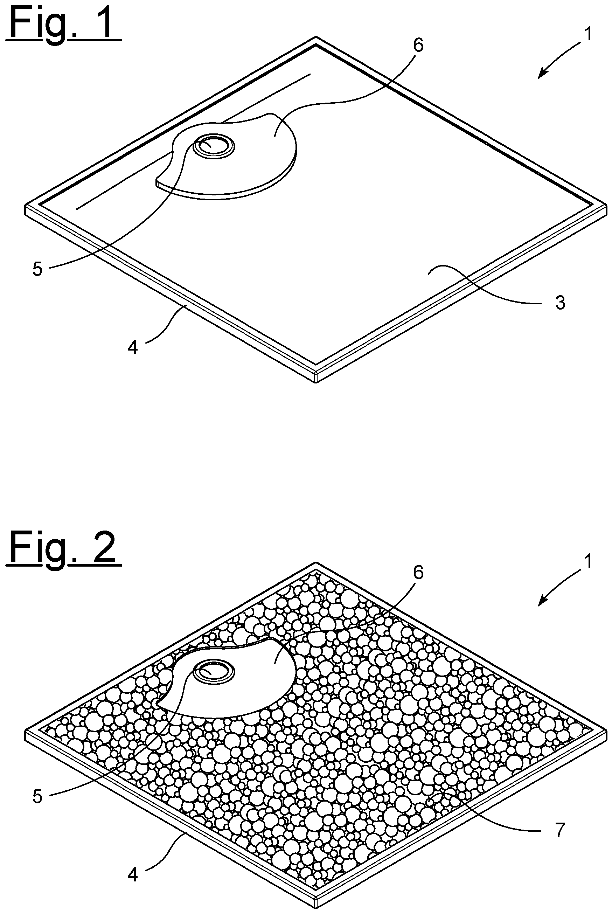

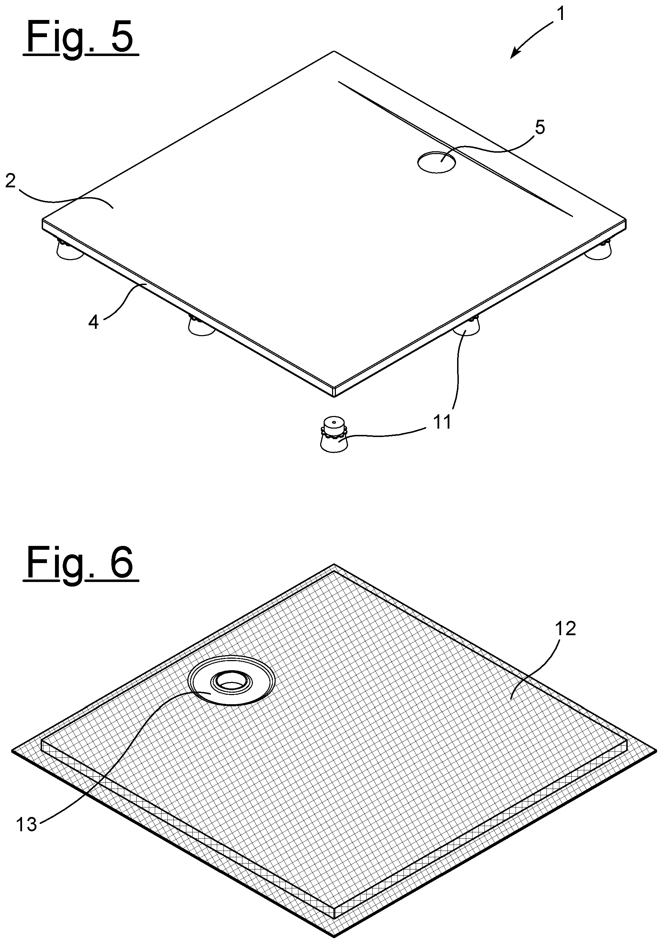

Die Fig. 1 zeigt einen Hauptkörper 1 aus emailliertem Stahlblech in Form einer Duschwanne. Der Hauptkörper 1 weist eine Nutzseite 2 auf, welche im montierten Zustand (siehe auch nachfolgend zu Fig. 5) eine Standfläche der Duschwanne bildet.

In der Fig. 1 ist der Hauptkörper 1 jedoch so angeordnet, dass die Nutzseite 2 unten liegt, wobei entsprechend eine im montierten Zustand nicht sichtbare, nicht-ebene Verdecktseite 3 oben liegt.

Der Hauptkörper weist einen umlaufenden C-förmigen Wannenrand 4 mit einer Unterkantung auf. Bezogen auf den umgedrehten Hauptkörper 1 bildet der umlaufende Wannenrand 4 an der Verdeckseite 3 einen Freiraum.

Der Hauptkörper 1 weist eine Öffnung 5 auf, die bei der montierten Sanitäreinrichtung als Ablauföffnung vorgesehen ist. An der Öffnung 5 wird dann in bekannter Weise eine Ablaufgarnitur angeordnet. Damit für die Ablaufgarnitur ein Freiraum verbleibt, ist gemäß der Fig. 1 um die Öffnung 5 ein Füllkörper 6 angeordnet, dessen Funktion sich aus den nachfolgenden Erläuterungen ergibt.

Gemäß der Fig. 2 ist an der Verdecktseite 3 ein Volumenmaterial 7 angeordnet. Wie nachfolgend weiter erläutert, ist das Volumenmaterial 7 von einem aus Blähglas-Partikeln 8 gebildeten Schüttgut und einem die Blähglas-Partikel 8 verbindenden ausgehärteten Bindemittel 9 gebildet.

Bei der Herstellung des Volumenmaterials können die Blähglas-Partikel 8 dann als Schütte eingefüllt und noch geformt werden. Insbesondere kann die Schütte aus Blähglas-Partikeln 8 leicht um den Füllkörper 6 herum angeordnet werden, wobei auch noch eine weitere Formgebung und Modellierung grundsätzlich denkbar sind.

Bei der Herstellung wird des Weiteren das zunächst noch nicht ausgehärtete Bindemittel 9 zugegeben. Dabei ist es möglich, dass zunächst die Schütte aus Blähglas-Partikeln 8 in der gewünschten Weise angeordnet wird, wobei dann nachfolgend das Bindemittel 9 aufgebracht, beispielsweise aufgesprüht, wird, welches dann aushärtet. Alternativ ist aber auch denkbar, dass die Blähglas-Partikel 8 bei dem Anordnen an der Verdecktseite 3 bereits mit dem Bindemittel 9 versehen sind, welches aber noch nicht ausgehärtet ist. Beispielsweise kann ein flüssiges Bindemittel 9 vorgesehen sein, welches dann während der Aushärtedauer noch eine gewisse Verteilung und Formung der Blähglas-Partikel 8 ermöglicht.

Grundsätzlich ist es auch denkbar, ein festes oder flüssiges Bindemittel einzusetzen, welches durch externe Einflüsse wie Wärmezufuhr und/oder Bestrahlung aktiviert wird.

Nach einem zumindest teilweisen Aushärten des Bindemittels (9) kann das Füllstück 6 dann entfernt werden, wodurch an der Verdecktseite 3 ein Freiraum gebildet wird.

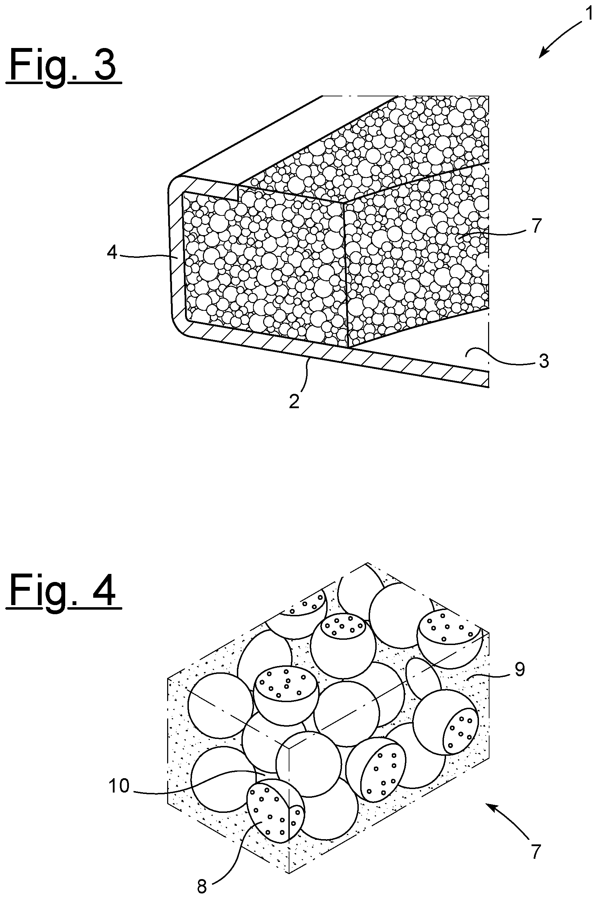

Gemäß der Detailansicht der Fig. 3 schließt das Volumenmaterial 7 flächenbündig an die an dem Wannenrand 4 gebildete Unterkantung an. Beispielsweise kann dazu vorgesehen sein, dass die als Schüttgut aufgebrachten Blähglas-Partikel 8 bei der Herstellung über den C-förmigen Wannenrand 4 mit einer Leiste oder dergleichen abgezogen werden.

Grundsätzlich ist es aber auch möglich, dass das Volumenmaterial 7 sich über eine größere oder geringere Höhe erstreckt, wozu entsprechende Maßnahmen beispielsweise aus der DE 10 2022 128 990 B3 bekannt sind, auf dessen Inhalt ausdrücklich Bezug genommen wird. Auch die Integration von verschiedenen Funktionselementen ist diesem Stand der Technik erläutert, wobei die entsprechenden Maßnahmen auch im Rahmen der vorliegenden Erfindung vorgesehen sein können.

Die Fig. 4 zeigt eine Detailansicht des aus den Blähglas-Partikeln 8 und dem ausgehärteten Bindemittel 9 gebildeten Volumenmaterials 7.

Die Fig. 4 zeigt hierzu konkret eine Ausgestaltung, bei der die Blähglas-Partikel 8 Luft bzw. Gaseinflüsse aufweisen, wobei die aus Blähglas gebildeten Partikel 8 eine runde Form aufweisen.

Wasserglas als anorganisches Bindemittel 9 ist gerade in Kombination mit Blähglas im besonderen Maße geeignet, welches dann die Blähglas-Partikel 8 stoffschlüssig verbindet. Insbesondere können in dem Volumenmaterial 7 auch noch Poren 10 als Freiräume vorhanden sein, sodass das Volumenmaterial 7 insbesondere äußerst belastbar aber dennoch vergleichsweise leicht ist.

Das Volumenmaterial 7 ist vorzugsweise auch nachträglich noch durch Bohren oder Fräsen bearbeitbar, beispielsweise um Füße 11 oder dergleichen montieren zu können. Für die Kombination von Blähglas-Partikel 8 und Wasserglas als Bindemittel 9 sind diese Vorgaben ohne weiteres erfüllt.

Durch die hohe Stabilität des Volumenmaterials 7 wird zusammen mit dem Hauptkörper 1 eine Art Verbundelement gebildet, dessen Festigkeit wesentlich auch von dem Volumenmaterial 7 bereitgestellt wird.

Der Hauptkörper 1 kann dabei im Vergleich zu Ausgestaltungen gemäß dem Stand der Technik mit einer geringeren Dicke gefertigt werden. Beispielsweise kann der Hauptkörper 1 in Form einer Duschwanne auch mit einer Blechdicke zwischen 0,2 mm und 1,4 mm gebildet werden.

Hinsichtlich der Figuren 1 und 2 kann dann insbesondere auch vorgesehen sein, dass der Hauptkörper 1 bei der Fertigung aktiv in einer vorgegebenen Form gehalten wird, wozu beispielsweise Magnete, Niederhalter oder dergleichen genutzt werden können.

Die Fig. 5 zeigt eine mögliche Montage der Sanitäreinrichtung mit separaten Füßen 11. Wie zuvor erläutert, können die Füße angeschraubt werden. Aufnahmen für die Füße 11 können dabei an dem Volumenmaterial 7 angeschraubt werden oder auch in Form von Hülsen oder dergleichen als Funktionselemente direkt in dem Volumenmaterial 7 eingebettet sein. Dabei ergibt sich der Vorteil, dass bei der zuvor beschriebenen Herstellung das Volumenmaterial 7 sehr leicht mit einer ebenen und gleichzeitig tragfähigen Fläche gebildet werden kann. Grundsätzlich kann es aber auch ausreichend sein, die Füße 11 in ihrer Höhe auszurichten und die Sanitäreinrichtung lediglich aufzulegen.

Die Fig. 6 zeigt eine Variante der vorliegenden Erfindung. Gezeigt ist die Sanitäreinrichtung in einer Ansicht gemäß der Fig. 2, wobei jedoch der Füllkörper 6 bereits entfernt ist. Der Hauptkörper 1 mit dem daran angeordneten Volumenmaterial 7 ist von einem Dichtmaterial 12 abgedeckt, welches somit einen unmittelbaren Bestandteil der Sanitäreinrichtung bildet. Das Dichtmaterial 12 kann dabei auch direkt mit den Bindemitteln 9 oder gegebenenfalls auch mit einem separaten Klebstoff fixiert sein. Im Bereich der Öffnung 5 ist des Weiteren auch bereits eine Ablaufdichtung 13 direkt an das Dichtmaterial 12 angeschlossen.

Im Rahmen der Erfindung kann die Sanitäreinrichtung auch vollständig aus dem Volumenmaterial 7 gebildet sein. Wenn der Formkörper aus dem Volumenmaterial 7, wie auch zuvor beschrieben, mit einem Hauptkörper 1 kombiniert ist, können dann auch im montierten Zustand Abschnitte des Formkörpers freiliegen.

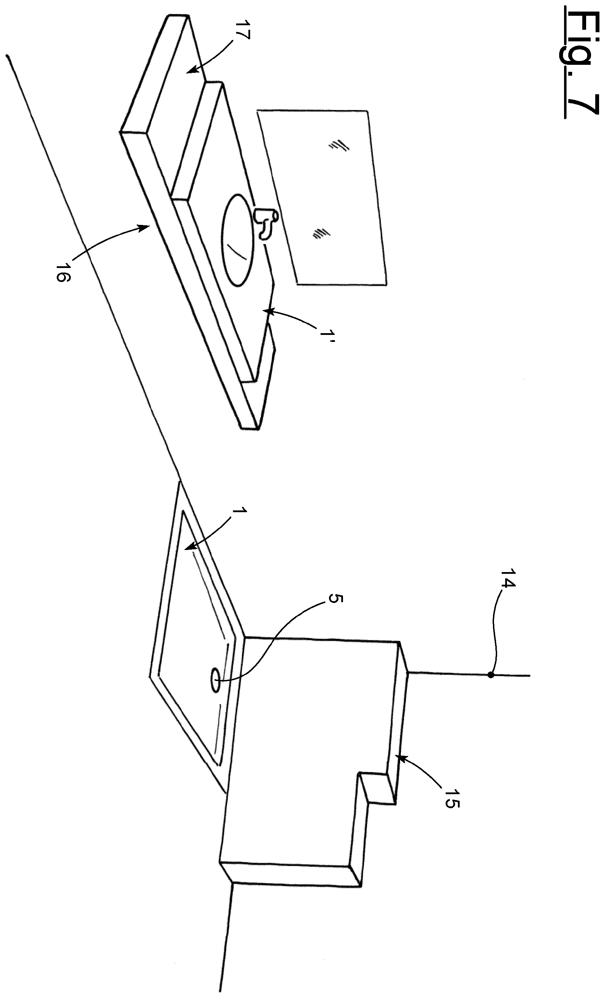

Vor diesem Hintergrund zeigt die Fig. 7 exemplarisch verschiedene Ausgestaltungen der erfindungsgemäßen Sanitäreinrichtung. So ist die zuvor beschriebene Duschwanne in einem Sanitärraum im Bereich einer Raumecke 14 angeordnet, wobei das bei dieser Sanitäreinrichtung an der Verdecktseite 3 anschließende Volumenmaterial 7 nicht sichtbar ist.

Eine weitere erfindungsgemäße Sanitäreinrichtung ist benachbart zu der Duschwanne als ein Vorwandelement 15 ausgebildet, welches an seiner Oberseite eine gestufte Ablage bildet. Das Vorwandelement 15 ist dabei aus dem zuvor beschriebenen Volumenmaterial 7 gebildet und kann eine nicht separat dargestellte Deckschicht aufweisen.

Eine weitere erfindungsgemäße Sanitäreinrichtung umfasst einen Hauptkörper 1' in Form eines Waschbeckens, wobei das Volumenmaterial 7 auch dort wie bei der der zuvor beschriebenen Duschwanne an einer Verdecktseite des Hauptkörpers 1' angeordnet ist. Das Volumenmaterial 7 erstreckt sich aber zusätzlich aus als einteiliger Formkörper unterhalb und seitlich des Hauptkörper 1' und bildet dabei eine Konsole 16 aus, welche eine Wandmontage der Sanitäreinrichtung ermöglicht und des Weiteren auch Ablageflächen 17 bereitstellt. Auch bei dieser Ausführungsform kann der Formkörper eine nicht in Detail dargestellte Deckschicht aufweisen.

## Patentansprüche

1. Sanitäreinrichtung umfassend einen Formkörper aus einem Volumenmaterial (7), **dadurch gekennzeichnet, dass** das Volumenmaterial mit Blähglas-Partikeln (8) und einem die Blähglas-Partikeln (8) verbindenden ausgehärteten Bindemittel (9) in Form von Wasserglas gebildet ist.

2. Sanitäreinrichtung nach Anspruch 1, **dadurch gekennzeichnet, dass** diese des Weiteren einen Hauptkörper (1) mit einer Nutzseite (2) umfasst.

3. Sanitäreinrichtung nach Anspruch 2, **dadurch gekennzeichnet, dass** der Formkörper an einer Verdecktseite (3) des Hauptkörpers (1) an diesen anschließt, wobei die Verdecktseite (3) des Hauptkörpers (1) und der daran anschließende Formkörper zumindest abschnittsweise eine komplementäre Topografie aufweisen.

4. Sanitäreinrichtung nach Anspruch 2 oder 3, **dadurch gekennzeichnet, dass** das Volumenmaterial (7) stoffschlüssig und/oder formschlüssig mit dem Hauptkörper (1) verbunden ist.

5. Sanitäreinrichtung nach einem der Ansprüche 2 bis 4, **dadurch gekennzeichnet, dass** der Hauptkörper (1) aus emailliertem Stahlblech gebildet ist.

6. Sanitäreinrichtung nach einem der Ansprüche 2 bis 5, **dadurch gekennzeichnet, dass** der Hauptkörper (1) eine dekorative Prägestruktur aufweist.

7. Sanitäreinrichtung nach einem der Ansprüche 2 bis 6, **dadurch gekennzeichnet, dass** das Volumenmaterial (7) einen Träger oder einen Unterbau des Hauptkörpers (1) bildet und vorzugsweise eine Standfläche aufweist.

8. Sanitäreinrichtung nach einem der Ansprüche 2 bis 7, **dadurch gekennzeichnet, dass** der Hauptkörper (1) die Form einer Duschfläche, einer Sanitärwanne oder eines Waschbeckens aufweist.

9. Sanitäreinrichtung nach einem der Ansprüche 1 bis 8, **dadurch gekennzeichnet, dass** das Volumenmaterial (7) mit einer Deckschicht versehen ist.

10. Sanitäreinrichtung nach Anspruch 9, **dadurch gekennzeichnet, dass** die Decksicht ein Material ausgewählt aus der Gruppe Lack, Kunststoff-Harz, Emaille, Folie, Pulverbeschichtung aufweist oder aus einer verschmolzenen Schicht der Blähglas-Partikel (8) gebildet ist.

11. Sanitäreinrichtung nach einem der Ansprüche 1 bis 10, **dadurch gekennzeichnet, dass** das Volumenmaterial (7) eine Dichte zwischen 0,15 g/cm³ und 0,75 g/cm³ aufweist

12. Sanitäreinrichtung nach einem der Ansprüche 1 bis 11, **dadurch gekennzeichnet, dass** das Massenverhältnis von Blähglas-Partikeln zu ausgehärtetem Bindemittel (9) zwischen 95:5 und 50:50, insbesondere zwischen 90:10 und 60:40, liegt.

13. Sanitäreinrichtung nach einem der Ansprüche 1 bis 12, **dadurch gekennzeichnet, dass** die Partikel (8) ein mittleres Volumen zwischen 0,0005 mm³ und 34 mm³, insbesondere zwischen 0,004 mm³ und 14 mm³ aufweisen.

14. Verfahren zur Herstellung einer Sanitäreinrichtung nach einem der Ansprüche 1 bis 13, wobei zur Bildung eines Formkörpers aus einem Volumenmaterial (7) Blähglas-Partikel (8) und Wasserglas als Bindemittel (9) bereitgestellt werden, eine Formgebung erfolgt und durch Aushärten des Bindemittels (9) das Volumenmaterial (7) gebildet wird.

15. Verfahren nach Anspruch 14, wobei die Formgebung und das Aushärten zumindest teilweise mit einem eine Nutzseite aufweisenden Hauptkörper (1) und/oder mit einer separaten Form erfolgen.

16. Verfahren nach Anspruch 14 oder 15, wobei das Volumenmaterial (7) zumindest teilweise durch ein additives Fertigungsverfahren aus den Blähglas-Partikeln (8) und Wasserglas als Bindemittel (9) gebildet wird.

17. Verfahren nach einem der Ansprüche 14 bis 16, wobei vor dem Aushärten des Bindemittels (9) und vorzugsweise auch vor dem Aufbringen der Partikel (8) als Schüttgut ein Füllkörper (6) angeordnet wird und wobei der Füllkörper (6) unter Ausbildung eines Freiraums in dem Volumenmaterial (7) wieder entfernt wird.

18. Verfahren nach einem der Ansprüche 14 bis 17, wobei der Formkörper nach dem Aushärten durch Schneiden und/oder Fräsen weiter geformt wird.

19. Verfahren nach einem der Ansprüche 14 bis 18, wobei zunächst der Formköper ausgeformt wird und danach an dem Formkörper zumindest abschnittsweise eine Decksicht gebildet und/oder ein Hauptkörper (1) angeordnet bzw. an dem Formkörper ausgeformt wird.
